# EUROPEAN PATENT APPLICATION

(11) **EP 3 780 706 A1**
(43) Date of publication of application: **17.02.2021**
(21) Application number: 18913975.1
(22) Date of filing: 04.04.2018
(51) Int. Cl.: H04W 24/10, H04W 72/04

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); LI, Huiling, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2018/014471
(87) International publication number: WO 2019/193695

(57) **Abstract**

A user terminal includes: a reception section that receives a downlink signal in a downlink partial band; a transmission section that transmits channel state information reporting based on the downlink signal in an uplink partial band; and a control section that controls at least one of switching of at least one partial band of the downlink partial band and the uplink partial band, and the transmission of the channel state information reporting.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for a larger volume and higher sophistication of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) have been also studied.

In legacy LTE systems (e.g., LTE Rel. 8 to 13), a user terminal (UE: User Equipment) periodically and/or aperiodically transmits Channel State Information (CSI) to a base station. The UE transmits the CSI by using an uplink control channel (PUCCH: Physical Uplink Control Channel) and/or an uplink shared channel (PUSCH: Physical Uplink Shared Channel).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It has been studied for a future radio communication system (referred to as NR below) to use one or more partial frequency bands (also referred to as partial bands or Bandwidth Parts (BWPs)) in a carrier (also referred to as a Component Carrier (CC) or a system band) for DL and/or UL communication (DL/UL communication).

Thus, it is assumed that, when one or more frequency bands (e.g., BWPs) used for DL/UL communication in a carrier are configurable, a BWP used for communication is switched and controlled. Furthermore, according to NR, CSI reporting that uses a configuration different from those of legacy LTE systems (e.g., LTE Rel. 13 or prior releases) has been studied.

However, when a BWP is switched to perform communication, study regarding how to control CSI reporting has not advanced yet. There is a risk that, if an appropriate control method is not used in a case where BWP switching and CSI reporting are applied, it is not possible to perform flexible control, and a communication throughput or communication quality deteriorates.

One of objects of the present disclosure is to provide a user terminal and a radio communication method that can appropriately perform communication when using BWP switching and CSI reporting.

### Solution to Problem

A user terminal according to one aspect of the present disclosure includes: a reception section that receives a downlink signal in a downlink partial band; a transmission section that transmits channel state information reporting based on the downlink signal in an uplink partial band; and a control section that controls at least one of switching of at least one partial band of the downlink partial band and the uplink partial band, and the transmission of the channel state information reporting.

### Advantageous Effects of Invention

According to the present invention, it is possible to appropriately perform communication even when using BWP switching and CSI reporting.

### Brief Description of Drawings

Figs. 1A to 1C are diagrams illustrating one example of a BWP configuration scenario.
Fig. 2 is a diagram illustrating one example of control of activation/deactivation of a BWP.
Fig. 3 is a diagram illustrating one example of a method for triggering or activating CSI reporting for an available CSI-RS configuration.
Figs. 4A and 4B are diagrams illustrating one example of an influence that switching of the BWP in a paired spectrum has on CSI reporting.
Fig. 5 is a diagram illustrating one example of a timing of CSI reporting triggering and BWP switching triggering.
Figs. 6A and 6B are diagrams illustrating one example of an operation of CSI reporting and BWP switching according to aspect 1.
Figs. 7A and 7B are diagrams illustrating one example of an operation of CSI reporting and BWP switching according to aspect 2.
Fig. 8 is a diagram illustrating another example of CSI reporting and BWP switching according to aspect 2.
Fig. 9 is a diagram illustrating one example of a schematic configuration of a radio communication system according to one embodiment.
Fig. 10 is a diagram illustrating one example of an overall configuration of a radio base station according to the one embodiment.
Fig. 11 is a diagram illustrating one example of a function configuration of the radio base station according to the one embodiment.
Fig. 12 is a diagram illustrating one example of an overall configuration of a user terminal according to the one embodiment.
Fig. 13 is a diagram illustrating one example of a function configuration of the user terminal according to the one embodiment.
Fig. 14 is a diagram illustrating one example of hardware configurations of the radio base station and the user terminal according to the one embodiment.

### Description of Embodiments

It has been studied for a future radio communication system (e.g., NR, 5G or 5G+) to allocate a carrier (a Component Carrier (CC), a cell or a system band) of a wider bandwidth (e.g., 100 to 800 MHz) than those of legacy LTE systems (e.g., LTE Rel. 8 to 13).

On the other hand, the future radio communication system is assumed to include, in a mixed manner, user terminals (also referred to as Wideband (WB) UEs and single carrier WB UEs) having capability for performing transmission and/or reception (transmission/reception) in the entire carrier, and user terminals (also referred to as BW (Bandwidth) reduced UEs) that do not have capability for performing transmission and reception in the entire carrier.

Thus, the future radio communication system is assumed to include a plurality of user terminals in a supported bandwidth in a mixed manner (various BW UE capabilities). Therefore, it has been studied to semi-statically configure one or more partial frequency bands in the carrier. Each frequency band (e.g., 50 MHz or 200 MHz) in the carrier is referred to as a partial band or a Bandwidth part (BWP).

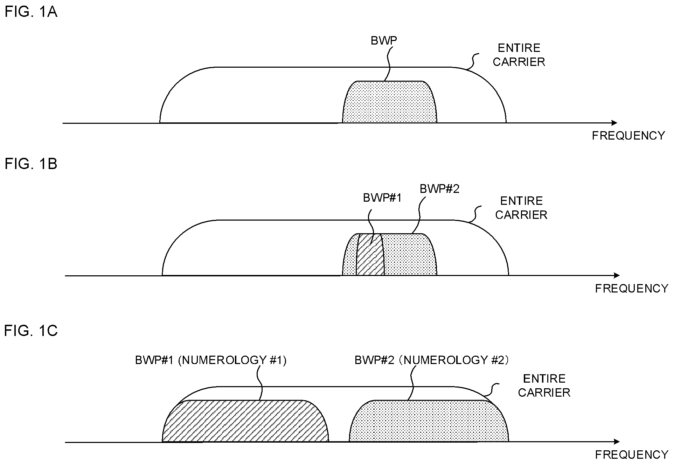

Fig. 1 is a diagram illustrating one example of a BWP configuration scenario. Fig. 1A illustrates a scenario (Usage scenario #1) that 1 BWP is configured to the user terminal in 1 carrier. In, for example, Fig. 1A, a BWP of 200 MHz is configured in the carrier of 800 MHz. Activation or deactivation of the BWP may be controlled.

In this regard, activation of the BWP refers to a state where the BWP is available (or refers to making a transition to this available state), and is also referred to as activation or enabling of a BWP configuration (BWP configuration information). Furthermore, deactivation of the BWP is a state where the BWP is unavailable (or refers to making a transition to this unavailable state), and is also referred to as deactivation or disabling of the BWP configuration information. When the BWP is scheduled, this BWP is activated.

Fig. 1B illustrates a scenario (Usage scenario #2) that a plurality of BWPs are configured to the user terminal in 1 carrier. As illustrated in Fig. 1B, at least part of a plurality of BWPs (e.g., BWPs #1 and #2) may overlap. In, for example, Fig. 1B, the BWP #1 is a frequency band that is part of the BWP #2.

Furthermore, activation or deactivation of at least one of a plurality of BWPs may be controlled. In, for example, Fig. 1B, when data is not transmitted or received, the BWP #1 may be activated, and, when data is transmitted or received, the BWP #2 may be activated. More specifically, when there is data to be transmitted or received, the BWP #1 may be switched to the BWP #1, and, when transmission or reception of the data is finished, the BWP #2 may be switched to the BWP #1. Consequently, the user terminal does not need to monitor the BWP #2 of a wider bandwidth than that of the BWP #1 at all times, so that it is possible to suppress power consumption.

In addition, in Figs. 1A and 1B, a network (e.g., radio bae station) may not assume that the user terminal performs reception and/or transmission outside a BWP in an active state. In addition, in Fig. 1A, the user terminal that supports the entire carrier is not prevented from receiving and/or transmitting a signal outside the BWP at all.

Fig. 1C illustrates a scenario (Usage scenario #3) that a plurality of BWPs are configured to different bands in 1 carrier. As illustrated in Fig. 1C, different numerologies may be applied to a plurality of BWPs. In this regard, the numerology may be at least one of a sub-carrier spacing, a symbol length, a slot length, a Cyclic Prefix (CP) length, a slot (Transmission Time Interval (TTI)) length, and the number of symbols per slot.

In, for example, Fig. 1C, the BWPs #1 and #2 of the different numerologies are configured to the user terminal having capability for performing transmission and reception in the entire carrier. In Fig. 1C, at least one BWP configured to the user terminal may be activated or deactivated, and one or more BWPs may be active in a certain time.

In addition, a BWP used for DL communication may be referred to as a DL BWP (DL frequency band), and a BWP used for UL communication may be referred to as a UL BWP (UL frequency band). At least part of frequency bands of the DL BWP and the UL BWP may overlap. Hereinafter, the DL BWP and the UL BWP that are not distinguished will be collectively referred to as a BWP.

At least one of DL BWPs (e.g., a DL BWP included in a primary CC) configured to the user terminal may include a control resource domain that is a DL control channel (DCI) allocation candidate. The control resource domain may be referred to as a control resource set (CORESET), a control subband, a search space, a search space resource set, a control domain, a control subband or an NR-PDCCH domain.

The user terminal monitors one or more search spaces in the control resource set, and detects DCI for the user terminal. The search space may include a Common Search Space (CSS) in which DCI (e.g., group DCI or common DCI) that is common between one or more user terminals is arranged, and/or a user terminal (UE)-specific Search Space (USS) in which user terminal-specific DCI (e.g., a DL assignment and/or a UL grant) is arranged.

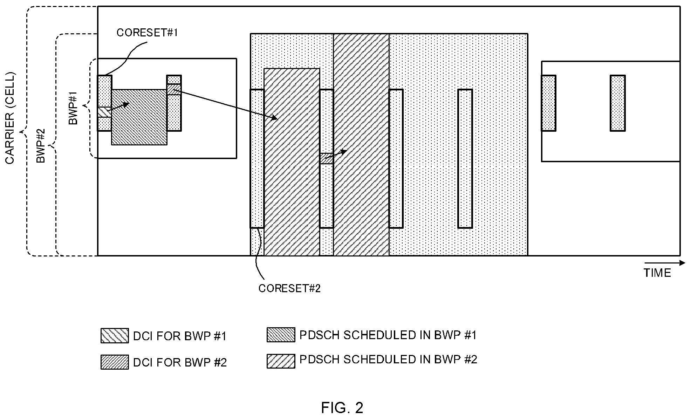

Control of activation and/or deactivation (also referred to as activation/deactivation, switching or determination) of a BWP will be described with reference to Fig. 2. Fig. 2 is a diagram illustrating a control example in a case where one BWP is activated (a case where a BWP to be activated is switched). In addition, Fig. 2 assumes the scenario illustrated in Fig. 1B. However, control of activation/deactivation of the BWP is applicable to the scenarios illustrated in Figs. 1A and 1C, too, as appropriate.

Furthermore, in Fig. 2, a CORESET #1 is configured in the BWP #1, and a CORESET #2 is configured in the BWP #2. One or more search spaces are respectively provided for the CORESET #1 and the CORESET #2. For example, DCI for the BWP #1 and DCI for the BWP #2 may be arranged in an identical search space or different search spaces in the CORESET #1.

Furthermore, in Fig. 2, when the BWP #1 is in an active state, the user terminal monitors (blind-decodes) the search space in the CORESET #1 at a given periodicity (e.g., every one or more slots, every one or more mini slots or every given number of symbols), and detects DCI for the user terminal.

The DCI may include information (BWP information) indicating which BWP the DCI is for. The BWP information may be, for example, a BWP index and a given field value in the DCI. Furthermore, information of the BWP index may be included in DCI for scheduling on downlink, DCI for scheduling on uplink, or DCI of the common search space. The user terminal may determine a BWP for scheduling a PDSCH or a PUSCH by DCI based on the BWP information in the DCI.

When detecting the DCI for the BWP #1 in the CORESET #1, the user terminal receives the PDSCH scheduled (allocated) to given time and/or frequency resources (time/frequency resources) in the BWP #1 based on the DCI for the BWP #1.

Furthermore, when detecting the DCI for the BWP #2 in the CORESET #1, the user terminal performs deactivation on (deactivates) the BWP #1, and performs activation on (activates) the BWP #2. The user terminal receives the PDSCH scheduled to the given time/frequency resources of the DL BWP #2 based on the DCI for the BWP #2 detected in the CORESET #1.

In addition, in Fig. 2, the DCI for the BWP #1 and the DCI for the BWP #2 are detected at different timings in the CORESET #1. However, a plurality of pieces of DCI of different BWPs may be able to be detected at an identical timing. For example, a plurality of search spaces respectively associated with a plurality of BWPs in the CORESET #1 may be provided, and a plurality of pieces of DCI of different BWPS may be transmitted in a plurality of search spaces. The user terminal may monitor a plurality of search spaces in the CORESET #1, and detect a plurality of pieces of DCI of different BWPs at an identical timing.

When the BWP #2 is activated, the user terminal monitors (blind-decodes) the search space in the CORESET #2 at a given periodicity (e.g., every one or more slots, every one or more mini slots or every given number of symbols), and detects the DCI for the BWP #2. The user terminal may receive the PDSCH scheduled to the given time/frequency resources of the BWP #2 based on the DCI for the BWP #2 detected in the CORESET #2.

In addition, Fig. 2 illustrates a case where a given time is provided for switching between activation and deactivation. However, there may not be the given time.

When detection of the DCI for the BWP #2 in the CORESET #1 triggers activation of the BWP #2 as illustrated in Fig. 2, it is possible to activate the BWP #2 without explicit instruction information and consequently prevent an increase in an overhead accompanying control of activation.

Furthermore, when a data channel (e.g., the PDSCH and/or the PUSCH) is not scheduled in the activated BWP for a given duration, the BWP may be deactivated. In, for example, Fig. 2, the PDSCH is not scheduled in the DL BWP #2 for the given duration, and therefore the user terminal deactivates the BWP #2 and activates the BWP #1.

Furthermore, an MAC entity may control switching between BWPs by using a timer separately from notification from a base station to a UE. For example, there may be a configuration where the timer is activated when a BWP is switched, and a given BWP is switched when the timer expires. Switching of a BWP that uses DCI and switching of a BWP that uses the timer may be concurrently applied.

A DL BWP (a pair of the DL BWP and a UL BWP) may be switched based on the timer. Furthermore, for the timer for switching the pair of an active DL BWP and an active UL BWP in an unpaired spectrum, the UE may resume the timer from an initial value in a case where the given condition is satisfied. The given condition may be that DCI for scheduling of the PUSCH for the pair of the active DL BWP and the active UL BWP is detected.

By the way, according to NR, a reference signal for measuring a channel state on downlink has been studied. The reference signal for channel state measurement may be a signal that is referred to as a Cell-specific Reference Signal (CRS), a Channel State Information-Reference Signal (CSI-RS), a Synchronization Signal Block (an SSB or an SS/Physical Broadcast Channel (PBCH) block), a Synchronization Signal (SS) or a Demodulation-Reference Signal (DM-RS).

The UE feeds back (reports) a result measured based on the reference signal for the channel state measurement as Channel State Information (CSI) to a radio base station (that may be referred to as, for example, a Base Station (BS), a Transmission/Reception Point (TRP), an eNodeB (eNB), a gNB (NR NodeB) or a network). The CSI may include a Channel Quality Indicator (CQI), a Precoding Matrix Indicator (PMI) a Rank Indicator (RI), or an L1-RSRP (Reference Signal Received Power (RSRP) in a physical layer).

As a CSI feedback method, (1) Periodic CSI (P-CSI) reporting, (2) aperiodic CSI (A-CSI) reporting and (3) Semi-Persistent (semi-permanent) CSI reporting (SP-CSI) are studied.

A P-CSI reporting resource may be a resource configured by higher layer signaling.

An SP-CSI reporting resource may be a resource configured by higher layer signaling, may be a resource indicated by an activation signal (that may be referred to as a "trigger signal") of SP-CSI reporting, and may be a resource indicated by both of the higher layer signaling and the activation signal.

An A-CSI reporting resource may be a resource indicated by a trigger signal (DCI) or may be a resource indicated by both of the higher layer signaling and the trigger signal.

In this regard, the higher layer signaling may be one of, for example, Radio Resource Control (RRC) signaling, Medium Access Control (MAC) signaling and broadcast information or a combination of these.

As the MAC signaling, for example, an MAC Control Element (MAC CE) or an MAC Protocol Data Unit (PDU) may be used. The broadcast information may be, for example, a Master Information Block (MIB), a System Information Block (SIB) or Remaining Minimum System Information (RMSI).

Information of the CSI reporting resource may include information related to, for example, a reporting periodicity (ReportPeriodicity) and an offset (ReportSlotOffset), and these may be expressed in slot units or subframe units. The information of the CSI reporting resource may include a configuration ID (CSI-ReportConfigId), and parameters such as a CSI reporting method type (such as P-CSI reporting or SP-CSI reporting) and the reporting periodicity may be specified based on the configuration ID. Information of the SP-CSI reporting resource may be referred to as an SP-CSI reporting resource configuration or an SP-CSI reporting configuration.

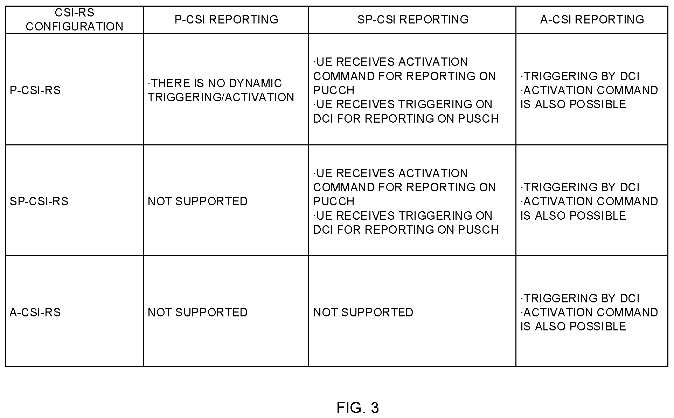

A CSI-RS configuration (CSI configuration) for CSI-RS measurement, and a CSI reporting configuration for CSI reporting may be independently notified to the UE. Fig. 3 is a diagram illustrating one example of a method for triggering or activating CSI reporting with respect to the CSI-RS configuration.

Similar to classification of Sounding Reference Signal (SRS) transmission into a P-SRS, an SP-SRS and an A-SRS, CSI reporting may be classified into P-CSI reporting, P-CSI reporting, SP-CSI Reporting on a PUCCH, SP-CSI Reporting on a PUSCH and A-CSI reporting.

When the P-CSI-RS is configured as the CSI-RS configuration, P-CSI reporting, SP-CSI reporting and A-CSI reporting are supported. P-CSI reporting is configured by an RRC parameter, and the UE does not receive dynamic triggering or activation.

In response to SP-CSI reporting, the UE receives an activation command for reporting on the PUCCH as an MAC CE or receive triggering on DCI for reporting on the PUSCH. The DCI may be DCI obtained by masking (scrambling) Cyclic Redundancy Check (CRC) bits based on a Radio Network Temporary Identifier (an RNTI, an SP-CSI-RNTI or an SP-CSI Cell-RNTI (SP-CSI C-RNTI)) for SP-CSI reporting. When the UE receives a given deactivation (release) signal or a given timer that is started by an activation command (triggering) expires, the UE may stop SP-CSI-RS measurement and SP-CSI reporting.

A-CSI reporting is triggered by DCI. A-CSI reporting may use the activation command.

When the SP-CSI-RS is configured as the CSI-RS configuration, SP-CSI reporting and A-CSI reporting are supported.

When the A-CSI-RS is configured as the CSI-RS configuration, A-CSI reporting is supported.

Furthermore, the UE may perform CSI-RS measurement in an active DL BWP, and perform CSI reporting in an active UL BWP.

P-CSI reporting or SP-CSI reporting that is associated with a DL BWP and whose reporting has been scheduled in a certain slot may be reported only when the associated DL BWP is an active BWP at a time position of a CSI reference resource for this reporting.

The CSI reporting configuration may be associated with one DL BWP and include DL BWP-specific information. The DL BWP-specific information may include a frequency band of one CSI reporting. The associated DL BWP information may be configured per resource configuration.

The CSI resource may be configured to each DL BWP. By adding a CSI resource to the CSI reporting configuration (CSI-ReportConfig), the CSI reporting configuration may share the same DL BWP information.

Under each reporting configuration (reportConfig), a PUCCH CSI resource (PUCCH-CSI-Resource) indicating UL BWP information may be configured to P-CSI reporting or SP-CSI reporting.

Furthermore, when CSI reporting that uses a BWP is configured to the UE, switching of the BWP is supposed to occur. Hereinafter, an influence of switching of the BWP in a case where P-CSI reporting or SP-CSI reporting on the PUCCH is performed by using BWPs (a DL BWP and a UL BWP) of a paired spectrum (FDD) will be described.

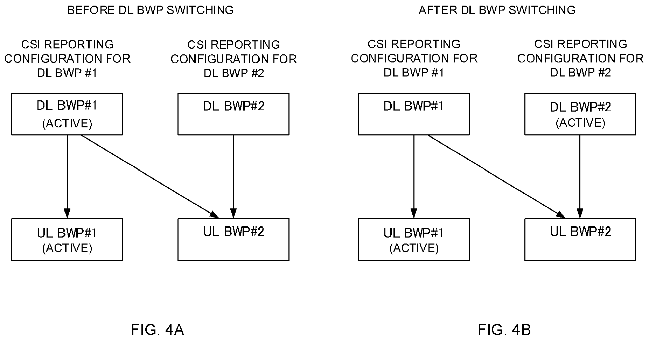

As illustrated in, for example, Fig. 4A, the DL BWP #1 is associated with UL BWPs #1 and #2, and the DL BWP #2 is associated with the UL BWP #2. The DL BWP is subsequently switched, and, when the DL BWP is switched from #1 to #2 as illustrated in Fig. 4B and the UL BWP is not switched, the DL BWP #2 and the UL BWP #1 are not associated, and therefore P-CSI reporting for the DL BWP #2 is not performed.

A BWP switching mechanism may be based on at least one of an RRC reconfiguration, the timer and DCI. The timer may be enabled for the DL BWP of the paired spectrum.

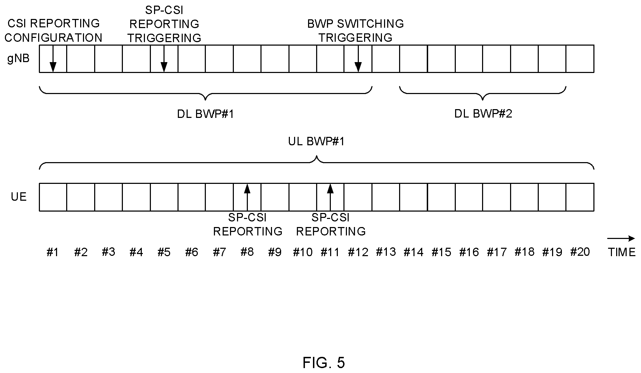

In this regard, a UE operation in a case where BWP switching and CSI reporting are instructed to the UE is not determined. Fig. 5 illustrates, for example, a case where the radio base station (gNB) transmits RRC signaling that configures a CSI PUCCH resource for SP-CSI reporting, and transmits an MAC CE that causes the radio base station to activate SP-CSI reporting in a slot #5. The UE performs CSI reporting processing in response to this activation, and periodically transmits SP-CSI reporting slots #8, #11 and .... In this regard, when the radio base station transmits DL BWP switching triggering in a slot #12, the UE does not determine how to perform CSI reporting and BWP switching.

When CSI reporting and BWP switching are instructed to the UE in this way, a problem is how to control CSI reporting and BWP switching. There is a risk that, when an appropriate control method is not used in a case where BWP switching and CSI reporting are applied, flexible control cannot be performed, and a communication throughput or communication quality deteriorate.

Hence, the inventors of this application have focused on a case where BWP switching could occur during processing of CSI reporting, studied controlling at least one of CSI reporting and BWP switching in this case and conceived the present invention.

The embodiment according to the present disclosure will be described in detail below with reference to the drawings. A radio communication method according to each embodiment may be each applied alone or may be applied in combination.

In this description, a "DCI format" and "DCI" may be interchangeably read.

### <Aspect 1>

A UE may assume that a BWP is not switched in a duration (CSI reporting processing duration) from an instruction (configuration, activation or triggering) of CSI reporting to transmission of the CSI reporting.

In other words, a radio base station (a gNB, an eNB, a network (NW) or a Transmission and Reception Point (TRP) may control at least one of the instruction (at least one of configuration, activation and triggering) of CSI reporting and the instruction for BWP switching. For example, when BWP switching is triggered, the radio base station may postpone transmission of BWP switching triggering (e.g., DCI) by a given timing. The given timing may come after transmission of first CSI reporting after an instruction (configuration, activation or triggering) to start CSI reporting, or may come after transmission of a given number of CSI reporting.

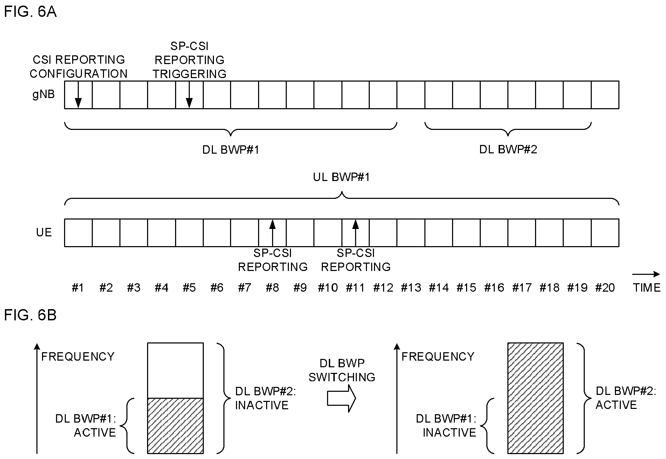

In this aspect, the radio base station is suitable to a case where BWP switching is controlled based on an RRC reconfiguration or DCI. Fig. 6A illustrates, for example, a case where the radio base station (gNB) transmits RRC signaling that configures a CSI PUCCH resource for SP-CSI reporting in a slot #1, and transmits an MAC CE that causes the radio base station to active SP-CSI reporting in a slot #5. The UE performs CSI reporting processing in response to this activation, and periodically transmits SP-CSI reporting in slots #8, #11 and ....

In this case, BWP switching is not performed in slots #5 to #8 (CSI reporting processing duration) and may be performed in slots #1 to #4 (before activation or triggering of CSI reporting).

Furthermore, this aspect is suitable to a case where an active BWP after switching does not include an active BWP before switching (a case where the active BWP after switching is not a superset of the active BWP before switching).

When an active DL BWP #2 after switching includes an active DL BWP #1 before switching as illustrated in, for example, Fig. 6B, if the DL BWP is switched during the CSI reporting processing duration, it is possible to use CSI measured in the DL BWP #1 for the DL BWP #2 similar to subband CSI reporting, and therefore continue CSI reporting processing. On the other hand, when the active DL BWP #2 after switching does not include the active DL BWP #1 before switching, if the DL BWP is switched during the CSI reporting processing duration, CSI measured in the DL BWP #1 cannot be used for the DL BWP #2, and therefore, it is preferable to avoid BWP switching during the CSI reporting processing duration.

Aspect 1 is applicable to P-CSI reporting, SP-CSI reporting and A-CSI reporting.

According to aspect 1, it is possible to avoid BWP switching from influencing CSI reporting.

### <Aspect 2>

BWP switching may be instructed (triggered) in a duration (CSI reporting processing duration) from an instruction (configuration, activation or triggering) of CSI reporting to transmission of the CSI reporting.

### «Aspect 2-1»

An operation of CSI reporting that uses BWPs of a paired spectrum will be described.

The paired spectrum may be a combination of a DL operating band and a UL operating band, and may be used for Frequency Division Duplex (FDD). At least one DL BWP may be configured to the DL operating band of the paired spectrum, and at least one UL BWP may be configured to the UL operating band of the paired spectrum. The DL BWP and the UL BWP in the paired spectrum may be separately switched.

Following cases 1 and 2 are supposed for CSI reporting that uses BWPs of a paired spectrum.

### •Case 1

When a DL BWP is switched by a timer, a RRC reconfiguration or a DCI format 1_1 (DL DCI or DCI for PDSCH scheduling), one of following operations A, B and C may be performed.

Operation A: When BWP switching triggering occurs during the CSI reporting processing duration, BWP switching may be postponed by a given timing. The given timing may come after transmission of first CSI reporting after an instruction (configuration, activation or triggering) to start CSI reporting, or may come after transmission of a given number of CSI reporting.

The UE may receive BWP switching triggering (e.g., DCI) and then postpone BWP switching. A radio base station may transmit the BWP switching triggering (e.g., DCI), and then postpone starting actual BWP switching.

The UE may deactivate (release) CSI reporting after transmission of given CSI reporting, and perform BWP switching. The UE may configure a timer that supports the postponement of the BWP switching, and deactivate the CSI reporting at a time of expiration of the timer.

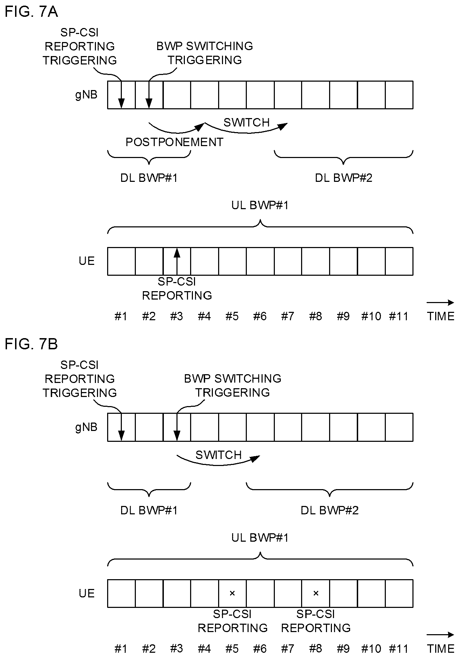

When the UE receives SP-CSI reporting triggering in a slot #1 and the UE receives the BWP switching triggering in a slot #2 as illustrated in, for example, Fig. 7A, the UE postpones BWP switching to a next slot #4 of SP-CSI transmission on a first PUSCH in a slot #3. In this regard, a time from a start to an end of the BWP switching is 3 slots, yet may be several symbols to several slots.

According to this operation, the UE can transmit at least one CSI reporting, and the radio base station can check that activation or triggering of CSI reporting has been received, so that the radio base station can appropriately perform the operation.

Operation B: The UE may drop CSI reporting. The radio base station may perform BWP switching during the CSI reporting processing duration.

When the UE receives the SP-CSI reporting triggering in the slot #1 and the UE receives the BWP switching triggering in the slot #3 as illustrated in, for example, Fig. 7B, the UE performs BWP switching and drops (stops) SP-CSI transmission in slots #5 and #8.

Operation C: The UE may continue CSI reporting under a given condition. The given condition may be that an active BWP after switching includes an active BWP before switching (the active BWP after switching is a superset of the active BWP before switching).

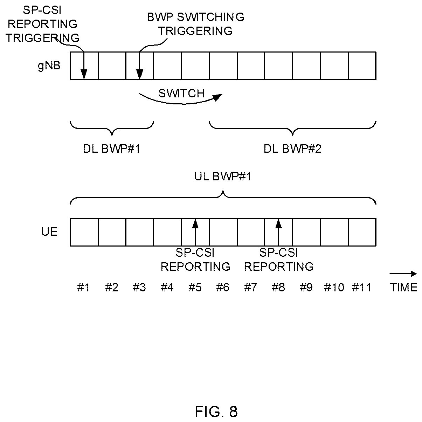

When a DL BWP #2 after switching includes an active DL BWP before switching as illustrated in, for example, Fig. 6B, the UE receives the SP-CSI reporting triggering in the slot #1 as illustrated in Fig. 8, and the UE receives the BWP switching triggering in the slot #3, the UE performs BWP switching and performs SP-CSI transmission in the slots #5 and #8.

When the active DL BWP #2 after switching includes an active DL BWP #1 before switching as described above, even if the DL BWP is switched during the CSI reporting processing duration, it is possible to use for the DL BWP #2 CSI measured in the DL BWP #1 similar to subband CSI reporting, and consequently continue CSI reporting processing.

### •Case 2

When a UL BWP is switched by an RRC reconfiguration or a DCI format 0_1 (UL DCI or DCI for PUSCH scheduling), one of following operations A, B and C may be performed.

Operation A: When BWP switching triggering occurs during the CSI reporting processing duration, BWP switching may be postponed by a given timing. The given timing may come after transmission of first CSI reporting after an instruction (configuration, activation or triggering) to start CSI reporting, or may come after transmission of a given number of CSI reporting.

The UE may receive the BWP switching triggering (e.g., DCI), and then postpone BWP switching (as illustrated in, for example, Fig. 7A), the radio base station may transmit the BWP switching triggering (e.g., DCI), and then postpone starting actual BWP switching.

The UE may deactivate (release) CSI reporting after transmission of given CSI reporting, and perform BWP switching. The UE may configure the timer that supports the postponement of BWP switching, and deactivate CSI reporting at the time of expiration of the timer.

Operation B: The UE may drop CSI reporting (as illustrated in, for example, Fig. 7B). The radio base station may perform BWP switching during the CSI reporting processing duration.

Operation C: The UE may continue CSI reporting under given conditions. The given conditions may be one or some combinations of following conditions 1 to 5.

Condition 1: An active UL BWP after switching configures or instructs a UL resource for CSI reporting for a DL BWP associated with the UL BWP.

Condition 2: A processing time is sufficient (the processing time is a given time or more).

The processing time may be a UL BWP switching time or a CSI reporting preparation time. For example, the condition 2 is that a time to prepare (create) CSI reporting after BWP switching can be reserved.

Condition 3: A state of a CSI request field of the DCI format 0_1 for BWP switching is "no CSI triggering".

When, for example, the DCI does not trigger CSI reporting in a state where the CSI reporting has already been triggered, the UE transmits the already triggered CSI reporting.

Condition 4: The state of the CSI request field of the DCI format 0_1 for BWP switching is that "CSI triggering is enabled", and a timing of CSI reporting that has been triggered by the DCI does not collide with a timing of already triggered CSI reporting.

When, for example, the condition 4 is satisfied in a state where the CSI reporting has already been triggered, the UE transmits both of the already triggered CSI reporting and newly triggered CSI reporting.

Condition 5: The state of the CSI request field of the DCI format 0_1 for BWP switching is that "CSI triggering is enabled".

When, for example, the condition 5 is satisfied in a state where the CSI reporting has already been triggered, the UE does not deal with the already triggered CSI reporting and transmits newly triggered CSI reporting. The UE may deactivate (release) the already triggered CSI reporting.

In other words, the UE may control the CSI reporting based on a value of the CSI request field (e.g., whether or not the value of the CSI request field is a given value).

### «Aspect 2-2»

An operation of CSI reporting that uses BWPs of an unpaired spectrum will be described.

The unpaired spectrum may be an operating band used on both of UL and DL or may be used for Time Division Duplex (TDD). At least one DL BWP and at least one UL BWP may be configured to the unpaired spectrum. Center frequencies of the DL BWP and the UL BWP are equal. Bandwidths of the DL BWP and the UL BWP may be different. The DL BWP and the UL BWP are concurrently switched.

BWP switching based on an RRC reconfiguration, a timer or DCI may be common between DL and UL. In other words, the UE switches both of the DL BWP and the UL BWP in the unpaired spectrum based on one RRC reconfiguration, one timer or one DCI.

Following operations A, B and C may be performed on CSI reporting that uses BWPs of the unpaired spectrum.

Operation A: When BWP switching triggering occurs during the CSI reporting processing duration, BWP switching may be postponed by a given timing. The given timing may come after transmission of first CSI reporting after an instruction (configuration, activation or triggering) to start CSI reporting, or may come after transmission of a given number of CSI reporting.

The UE may receive BWP switching triggering (e.g., DCI), and then postpone BWP switching (as illustrated in, for example, Fig. 7A). The radio base station may transmit the BWP switching triggering (e.g., DCI), and then postpone starting actual BWP switching.

The UE may deactivate (release) CSI reporting after transmission of given CSI reporting, and perform BWP switching. The UE may configure the timer that supports the postponement of the BWP switching, and deactivate the CSI reporting at a time of expiration of the timer.

Operation B: The UE may drop CSI reporting (as illustrated in, for example, Fig. 7B). The radio base station may perform BWP switching during the CSI reporting processing duration.

Operation C: The UE may continue CSI reporting under given conditions. The given conditions may be one or some combinations of following conditions 1 to 5.

Condition 1: A UL resource for CSI reporting for the DL BWP associated with the UL BWP has already been configured to instructed to an active UL BWP after switching.

Condition 2: A processing time is sufficient (the processing time is a given time or more).

The processing time may be a UL BWP switching time or a CSI reporting preparation time. For example, the condition 2 is that a time to prepare (create) CSI reporting can be reserved after BWP switching.

Condition 3: A state of the CSI request field of the DCI format 0_1 for BWP switching is "no CSI triggering".

When, for example, the DCI does not trigger CSI reporting in a state where CSI reporting has already been triggered, the UE transmits already triggered CSI reporting.

Condition 4: The state of the CSI request field of the DCI format 0_1 for BWP switching is that "CSI triggering is enabled", and a timing of CSI reporting triggered by the DCI does not collide with a timing of already triggered CSI reporting.

When, for example, the condition 4 is satisfied in a state where CSI reporting has been already triggered, the UE transmit both of the already triggered CSI reporting and newly triggered CSI reporting.

Condition 5: The state of the CSI request field of the DCI format 0_1 for BWP switching is that "CSI triggering is enabled".

When, for example, the condition 5 is satisfied in a state where CSI reporting is already triggered, the UE does not deal with the already triggered CSI reporting, and transmits newly triggered CSI reporting. The UE may deactivate (release) already triggered CSI reporting.

In other words, the UE may control CSI reporting based on a value of the CSI request field (e.g., whether or not a value of the CSI request field is a given value).

Aspect 2 is applicable to P-CSI reporting, SP-CSI reporting and A-CSI reporting.

According to aspect 2, the UE and the radio base station can correctly perform at least one BWP switching and CSI reporting.

### <Aspect 3>

Both of activation or triggering of SP-CSI reporting on a PUSCH or A-CSI reporting on a PUSCH, and BWP switching may be performed by one DCI.

### «Aspect 3-1»

One of following aspects 3-1-1 and 3-1-2 may be carried out for CSI reporting that uses BWPs of a paired spectrum.

### •Aspect 3-1-1

Triggering CSI reporting may be supported by switching a UL BWP by using a BWP indicator (BWP index) field in one DCI (a DCI format for PUSCH scheduling, a DCI format 0_1 or UL DCI), and enabling a CSI request field in the same DCI. In other words, a radio base station and a UE may switch a UL BWP and trigger CSI reporting by one DCI.

### •Aspect 3-1-2

One DCI (the DCI format for PUSCH scheduling, the DCI format 0_1 or the UL DCI) may support switching a DL BWP and triggering CSI reporting. Switching the DL BWP may be accompanied by switching of a UL BWP. In other words, the radio base station and the UE may switch the DL BWP and trigger CSI reporting by one DCI. Furthermore, the radio base station and the UE may switch the DL BWP and the UL BWP and trigger CSI reporting by one DCI.

A BWP indicator in the UL DCI may indicate the UL BWP.

X bits in the UL DCI may indicate the DL BWP. X represents, for example, 1 or 2. The X bits may be instructed by one of following instruction methods 1 and 2.

Instruction Direction 1: The UL DCI may include a field of the X bits (indicator) that explicitly indicates the DL BWP (index).

Instruction Direction 2: The X bits may be indicated by a combination (joint field) of a plurality of fields in the UL DCI, or may be indicated by reinterpretation of at least one specific field. The specific field may be a field defined in a specification.

For example, each state of the CSI request field is associated with a specific CSI reporting configuration, and the CSI reporting configuration may include the DL BWP. The DL BWP may be different from a current active BWP.

Furthermore, for example, in DCI for triggering SP-CSI reporting on a PUSCH, at least one specific field of at least one defined field (a Redundancy Version (RV), a HARQ Process Number (HPN), or a Code Block Group (CBG or CBG transmission information)) may indicate the DL BWP (a BWP index of the DL BWP). In other words, the radio base station and the UE may read at least one specific field in DCI that triggers SP-CSI reporting on the PUSCH as the BWP index of the DL

### BWP.

### «Aspect 3-2»

An operation of CSI reporting that uses BWPs of an unpaired spectrum will be described.

One DCI may support switching between a DL BWP and a UL BWP, and triggering CSI reporting. In other words, the radio base station and the UE may switch the DL BWP and the UL BWP and trigger CSI reporting by the one DCI. Following DL DCI and UL DCI may be used as the DCI.

### •DL DCI

For example, the DL DCI (a DCI format for PDSCH scheduling such as a DCI format 1_0 or 1_1) transmitted in a DL BWP #1 is used for scheduling of an MAC CE in the DL BWP #2, and the MAC CE may activate SP-CSI reporting on the PUCCH in the UL BWP #2.

The X bits in the DL DCI may indicate a BWP (at least one of the DL BWP and the UL BWP) after switching. X presents, for example, 1 or 2. The X bits may be instructed by one of following instruction methods 1 and 2.

Instruction Method 1: The DL DCI may include a field of the X bits (BWP indicator) that explicitly indicates the BWP (index) after switching.

Instruction Method 2: The X bits may be indicated by a combination (joint field) of a plurality of fields in the DL DCI or may be indicated by reinterpretation of at least one specific field. The specific field may be a field defined a specification.

For example, in DCI for scheduling the MAC CE that activates SP-CSI reporting on the PUCCH, a field of at least one of a Redundancy Version (RV), a HARQ Process Number (HPN), or a Code Block Group (CBG or CBG transmission information)) may indicate the BWP (BWP index). In other words, the radio base station and the UE may read at least one specific field in DCI that activates SP-CSI reporting on the PUCCH and schedules the MAC CE as the BWP index.

### •UL DCI

For example, the UL DCI (the DCI format for PUSCH scheduling such as the DCI format 0_1) that triggers A-CSI reporting or SP-CSI reporting on the PUSCH may indicate a BWP (at least one of the DL BWP and the UL BWP) after switching.

The BWP indicator in the UL DCI may indicate the BWP after switching.

Aspect 3 is applicable to SP-CSI reporting and A-CSI reporting.

According to aspect 3, one DCI instructs to activate or trigger SP-CSI reporting or A-CSI reporting, so that it is possible to suppress an overhead of the instruction and simplify control in the UE and the radio base station.

### <Aspect 4>

A UE operation related to BWP switching will be described.

P-CSI reporting is similar to PUSCH transmission that uses a configured grant type 1. A resource (e.g., periodicity) of PUSCH transmission that uses the configured grant type 1 is configured by higher layer signaling. A UE to which the PUSCH transmission that uses the configured grant type 1 is configured periodically performs the PUSCH transmission. A PUSCH that uses a configured grant may be referred to as a grant-free PUSCH (or PUSCH without grant).

SP-CSI reporting on a PUCCH or SP-CSI reporting on the PUSCH is similar to PUSCH transmission that uses a configured grant type 2. A resource (e.g., periodicity) of the PUSCH transmission that uses the configured grant type 2 is configured by higher layer signaling. The UE to which the PUSCH transmission that uses the configured grant type 2 is configured periodically performs the PUSCH transmission according to an activation command or DCI.

A-CSI reporting is similar to PUSCH transmission that uses a dynamic grant. The UE performs PUSCH transmission according to the dynamic grant (DCI).

When a BWP in each serving cell to which the BWP has been configured and that has been activated is activated, the UE or an MAC entity of the UE may initialize (re-initialize) P-CSI reporting or SP-CSI reporting. Furthermore, when a given BWP is activated, the UE or the MAC entity of the UE may start P-CSI reporting or SP-CSI reporting in the BWP at a symbol position configured by higher layer signaling for P-CSI reporting or a symbol position instructed/configured for SP-CSI reporting in the BWP in advance.

When the BWP in each serving cell to which the BWP has been configured and that has been activated is deactivated, while stopping P-CSI reporting or SP-CSI reporting matching the deactivated BWP within a given time, the UE or the MAC entity of the UE may suspend (retain) parameters for P-CSI reporting or SP-CSI reporting based on the higher layer signaling. In this case, when the BWP is activated at a subsequent timing, it is possible to quickly start P-CSI reporting or SP-CSI reporting without notifying the higher layer signaling again. Alternatively, while stopping P-CSI reporting or SP-CSI reporting matching the deactivated BWP within the given time, the UE or the MAC entity of the UE may clear (initialize) a parameter for P-CSI reporting or SP-CSI reporting based on the higher layer signaling. In this case, it is possible to reduce information that needs to be retained in a UE memory, and reduce a chip area and reduce power consumption. Furthermore, when a given parameter related to the given BWP is cleared accompanying deactivation of the given BWP, if the BWP is activated, the UE does not perform control based on the given parameter unless the given parameter is reconfigured.

### (Radio Communication System)

The configuration of the radio communication system according to one embodiment of the present disclosure will be described below. This radio communication system uses one or a combination of the radio communication method according to each of the above embodiment of the present invention to perform communication.

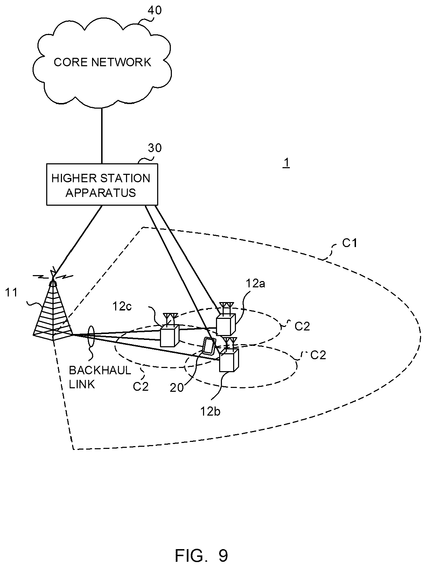

Fig. 9 is a diagram illustrating one example of a schematic configuration of the radio communication system according to the one embodiment. A radio communication system 1 can apply Carrier Aggregation (CA) and/or Dual Connectivity (DC) that aggregate a plurality of base frequency blocks (component carriers) whose one unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or may be referred to as a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and user terminals 20 are not limited to the aspect illustrated in Fig. 9.

The user terminal 20 can connect with both of the radio base station 11 and the radio base stations 12. The user terminal 20 is assumed to concurrently use the macro cell C1 and the small cells C2 by CA or DC. Furthermore, the user terminal 20 can apply CA or DC by using a plurality of cells (CCs).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a sub-carrier spacing, a bandwidth, a symbol length, a cyclic prefix length, a subframe length, a TTI length, the number of symbols per TTI, a radio frame configuration, specific filtering processing performed by a transceiver in a frequency domain, and specific windowing processing performed by the transceiver in a time domain. For example, a case where sub-carrier spacings of constituent OFDM symbols are different and/or a case where the numbers of OFDM symbols are different on a certain physical channel may be referred to as that numerologies are different.

The radio base station 11 and each radio base station 12 (or the two radio base stations 12) can be configured to be connected by way of wired connection (e.g., optical fibers compliant with a Common Public Radio Interface (CPRI) or an X2 interface) or by way of radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and Single Carrier Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into a band including one or contiguous resource blocks per terminal and causes a plurality of terminals to use respectively different bands to reduce an inter-terminal interference. In this regard, uplink and downlink radio access schemes are not limited to a combination of these, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and System Information Blocks (SIBs) are transmitted on the PDSCH. Furthermore, Master Information Blocks (MIBs) are transmitted on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is transmitted on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is transmitted on the PCFICH. Transmission acknowledgement information (also referred to as, for example, retransmission control information, HARQ-ACK or ACK/NACK) of a Hybrid Automatic Repeat reQuest (HARQ) for the PUSCH is transmitted on the PHICH. The EPDCCH is subjected to frequency division multiplexing with the PDSCH (downlink shared data channel) and is used to transmit DCI similar to the

### PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are transmitted on the PUSCH. Furthermore, downlink radio quality information (CQI: Channel Quality Indicator), transmission acknowledgement information and a Scheduling Request (SR) are transmitted on the PUCCH. A random access preamble for establishing connection with a cell is transmitted on the PRACH.

The radio communication system 1 transmits a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 transmits a Sounding Reference Signal (SRS) and a DeModulation Reference Signal (DMRS) as uplink reference signals. In this regard, the DMRS may be referred to as a user terminal-specific reference signal (UE-specific Reference Signal). Furthermore, a reference signal to be transmitted is not limited to these.

### (Radio Base Station)

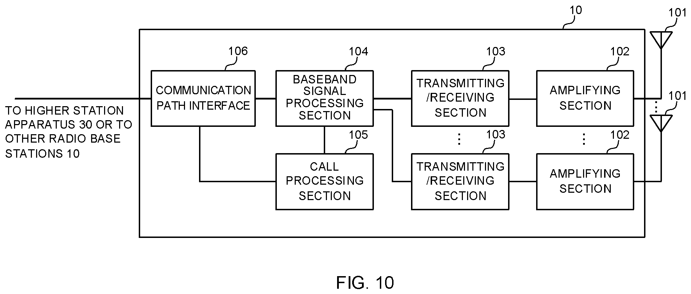

Fig. 10 is a diagram illustrating one example of an overall configuration of the radio base station according to the one embodiment. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency band, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present disclosure. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, reception processing of MAC retransmission control, and reception processing of an RLC layer and a PDCP layer on user data included in the input uplink signal, and transfers the user data to the higher station apparatus 30 via the channel interface 106. The call processing section 105 performs call processing (such as configuration and release) of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

Furthermore, each transmission/reception section 103 may not transmit an instruction for switching in a duration (e.g., CSI reporting processing duration) from reception of an instruction to transmit channel state information reporting to transmission of the channel state information reporting (aspect 1).

Furthermore, each transmission/reception section 103 may transmit the instruction for switching in the duration (e.g., CSI reporting processing duration) from reception of the instruction to transmit the channel state information reporting to transmission of the channel state information reporting (aspect 2).

Furthermore, each transmission/reception section 103 may transmit Downlink Control Information (DCI) including the instruction (e.g., configuration, activation or triggering of the CSI reporting) to transmit the channel state information reporting, and an instruction of a partial band after switching (aspect 3).

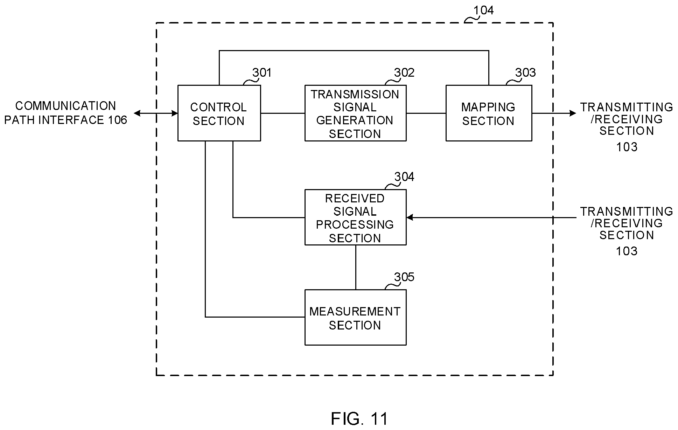

Fig. 11 is a diagram illustrating one example of a function configuration of the radio base station according to the one embodiment. In addition, this example mainly illustrates function blocks of characteristic portions according to the present embodiment, and may assume that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

Furthermore, the control section 301 controls scheduling of an uplink data signal (e.g., a signal transmitted on the PUSCH), an uplink control signal (e.g., a signal that is transmitted on the PUCCH and/or the PUSCH and is, for example, transmission acknowledgement information), a random access preamble (e.g., a signal transmitted on the PRACH) and an uplink reference signal.

Furthermore, the control section 301 may control at least one of switching of at least one partial band of a downlink partial band and an uplink partial band, and reception of the channel state information reporting.

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment for notifying downlink data allocation information, and/or a UL grant for notifying uplink data allocation information based on the instruction from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on a given radio resource based on the instruction from the control section 301, and outputs the downlink signal to each transmission/reception section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure, for example, received power (e.g., Reference Signal Received Power (RSRP)), received quality (e.g., Reference Signal Received Quality (RSRQ), a Signal to Interference plus Noise Ratio (SINR) and a Signal to Noise Ratio (SNR)), a signal strength (e.g., Received Signal Strength Indicator (RSSI)) or channel information (e.g., CSI). The measurement section 305 may output a measurement result to the control section 301.

### (User Terminal)

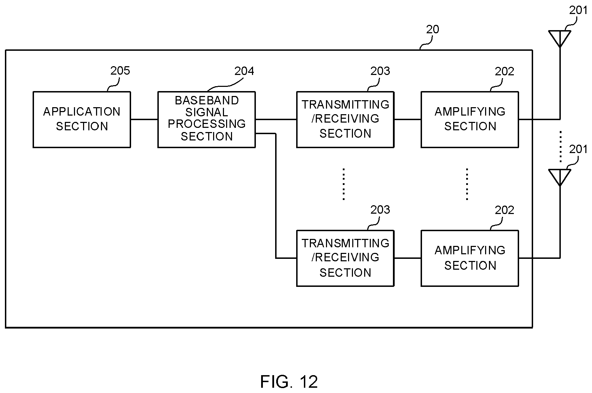

Fig. 12 is a diagram illustrating one example of an overall configuration of the user terminal according to the one embodiment. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present disclosure. In this regard, the transmission/reception sections 203 may be composed as an integrated transmission/reception section or may be composed of transmission sections and reception sections.

The baseband signal processing section 204 performs FFT processing, error correcting decoding, and reception processing of retransmission control on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs transmission processing of retransmission control (e.g., HARQ transmission processing), channel coding, precoding, Discrete Fourier Transform (DFT) processing and IFFT processing on the uplink user data, and transfers the uplink user data to each transmission/reception section 203.

Each transmission/reception section 203 converts the baseband signal output from the baseband signal processing section 204 into a radio frequency band, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 may receive a downlink signal (e.g., CSI-RS) in a downlink partial band (DL BWP). Furthermore, each transmission/reception section 203 may transmit Channel State Information (CSI) reporting (e.g., P-CSI reporting, SP-CSI reporting or A-CSI reporting) based on the downlink signal in an uplink partial band (UL BWP).

Furthermore, each transmission/reception section 203 may not receive an instruction for switching in a duration (e.g., CSI reporting processing duration) from reception of an instruction to transmit channel state information reporting to transmission of the channel state information reporting (aspect 1).

Furthermore, each transmission/reception section 203 may receive the instruction for switching in the duration (e.g., CSI reporting processing duration) from reception of the instruction to transmit the channel state information reporting to transmission of the channel state information reporting (aspect 2).

Furthermore, each transmission/reception section 203 may receive Downlink Control Information (DCI) including the instruction (e.g., configuration, activation or triggering of CSI reporting) to transmit the channel state information reporting, and an instruction of a partial band after switching (aspect 3).

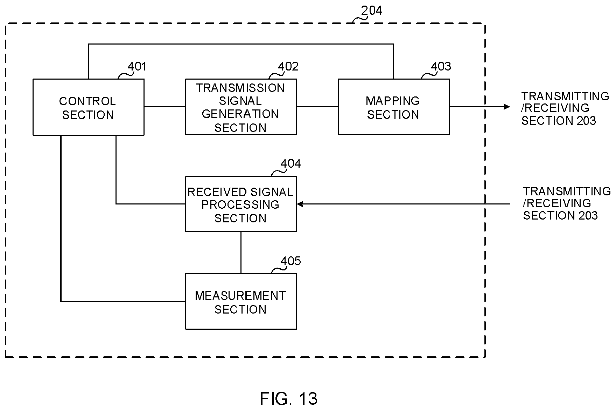

Fig. 13 is a diagram illustrating one example of a function configuration of the user terminal according to the one embodiment. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

Furthermore, the control section 401 may control at least one of switching of at least partial band of a downlink partial band and an uplink partial band, and transmission of the channel state information reporting.

Furthermore, when each transmission/reception section 203 receives the instruction for switching in the duration from reception of the instruction to transmit the channel state information reporting to transmission of the channel state information reporting, the control section 401 may control at least one of transmitting the channel state information reporting and postponing switching, stopping transmitting the channel state information reporting and performing the switching, and performing switching and transmitting the channel state information reporting based on given conditions.

Furthermore, the given conditions may be at least one of that the partial band after switching includes the downlink partial band before switching, that a channel state information reporting resource is configured in the uplink partial band after switching, that a processing time equal to or more than a given time is reserved for at least one of transmission of the channel state information reporting and switching, that a channel state information request field in downlink control information for instructing switching is a given value, and that transmission of the channel state information reporting after switching and transmission of the channel state information reporting before switching do not collide.

In addition, "transmission of the user terminal 20" may be read as, for example, "reception of the radio base station 10" in this description.

Furthermore, when obtaining from the received signal processing section 404 various pieces of information notified from the radio base station 10, the control section 401 may update parameters used for control based on the various pieces of information.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates an uplink control signal related to transmission acknowledgement information and Channel State Information (CSI) based on, for example, the instruction from the control section 401. Furthermore, the transmission signal generating section 402 generates an uplink data signal based on the instruction from the control section 401. When, for example, the downlink control signal notified from the radio base station 10 includes a UL grant, the transmission signal generating section 402 is instructed by the control section 401 to generate an uplink data signal.

The mapping section 403 maps the uplink signal generated by the transmission signal generating section 402, on a radio resource based on the instruction from the control section 401, and outputs the uplink signal to each transmission/reception section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmission/reception section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the reception section according to the present invention.

The received signal processing section 404 outputs information decoded by the reception processing to the control section 401. The received signal processing section 404 outputs, for example, broadcast information, system information, RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

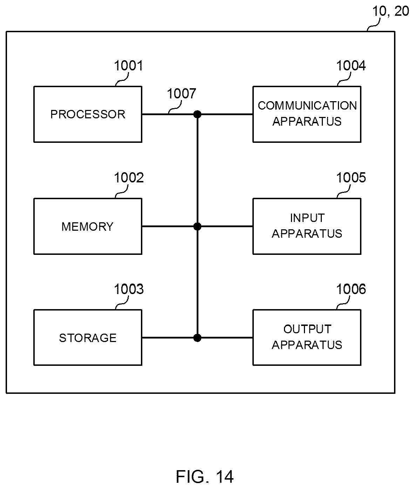

For example, the radio base station and the user terminal according to the one embodiment of the present disclosure may function as computers that perform processing of the radio communication method according to the present disclosure. Fig. 14 is a diagram illustrating one example of the hardware configurations of the radio base station and the user terminal according to the one embodiment. The above radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 14 or may be configured without including part of the apparatuses.

For example, Fig. 14 illustrates the only one processor 1001. However, there may be a plurality of processors. Furthermore, processing may be executed by one processor or processing may be executed by one or more processors concurrently, successively or by another method. In addition, the processor 1001 may be implemented by one or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiment are used. For example, the control section 401 of the user terminal 20 may be realized by a control program stored in the memory 1002 and operating on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to carry out the radio communication method according to the one embodiment.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via a wired and/or radio network, and is also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using buses that are different between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signaling). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a subslot.

The radio frame, the subframe, the slot, the mini slot and the symbol each indicate a time unit for transmitting signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used by each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time interval (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

Resource Blocks (RBs) are resource allocation units of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive ones. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive ones.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The input and output information and signals can be overwritten, updated or additionally written. The output information and signals may be deleted. The input information and signals may be transmitted to other apparatuses.

Notification of information is not limited to the aspects/embodiment described in this description and may be performed by using other methods. For example, the information may be notified by physical layer signaling (e.g., Downlink Control Information (DCI) and Uplink Control Information (UCI)), higher layer signaling (e.g., Radio Resource Control (RRC) signaling, broadcast information (Master Information Blocks (MIBs) and System Information Blocks (SIBs)), and Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") may be made not only explicitly but also implicitly (by, for example, not notifying this given information or by notifying another information).

Decision may be made based on a value (0 or 1) expressed as 1 bit, may be made based on a boolean expressed as true or false or may be made by comparing numerical values (e.g., comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSL)) and/or radio techniques (e.g., infrared rays and microwaves), these wired techniques and/or radio technique are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station is also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used.

The mobile station is also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present disclosure may be applied to a configuration where communication between the radio base station and the user terminal is replaced with communication between a plurality of user terminals (D2D: Device-to-Device). In this case, the user terminal 20 may be configured to include the functions of the above radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MME) or Serving-Gateways (S-GW) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A),LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between two or more elements, and can include that one or more intermediate elements exist between the two elements "connected" or "coupled" with each other. The elements may be coupled or connected physically, logically or by way of a combination of physical and logical connections. For example, "connection" may be read as "access".

It can be understood that, when connected in this description, the two elements are "connected" or "coupled" with each other by using one or more electric wires, cables and/or printed electrical connection, and by using electromagnetic energy having wavelengths in radio frequency domains, microwave domains and/or (both of visible and invisible) light domains in some non-restrictive and incomprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The invention according to the present disclosure has been described in detail above. However, it is obvious for a person skilled in the art that the invention according to the present disclosure is not limited to the embodiment described in this description. The invention according to the present disclosure can be carried out as modified and changed aspects without departing from the gist and the scope of the invention defined by the recitation of the claims. Accordingly, the disclosure of this description intends for exemplary explanation, and does not have any restrictive meaning to the invention according to the present disclosure.

## Claims

1. A user terminal comprising:
a reception section that receives a downlink signal in a downlink partial band;
a transmission section that transmits channel state information reporting based on the downlink signal in an uplink partial band; and
a control section that controls at least one of switching of at least one partial band of the downlink partial band and the uplink partial band, and the transmission of the channel state information reporting.

2. The user terminal according to claim 1, wherein the reception section does not receive an instruction of the switching in a duration from reception of an instruction to transmit the channel state information reporting to the transmission of the channel state information reporting.

3. The user terminal according to claim 1, wherein, when the reception section receives an instruction of the switching in a duration from reception of an instruction to transmit the channel state information reporting to the transmission of the channel state information reporting, the control section controls at least one of transmitting the channel state information reporting, postponing the switching, stopping transmitting the channel state information reporting, performing the switching, and performing the switching and transmitting the channel state information reporting based on a given condition.

4. The user terminal according to claim 3, wherein the given condition is at least one of that the downlink partial band after the switching includes the downlink partial band before the switching, that a resource of the channel state information reporting is configured to the uplink partial band after the switching, that a processing time equal to or more than a given time is reserved for at least one of the transmission of the channel state information reporting and the switching, that a channel state information request field in downlink control information for instructing the switching is a given value, and that the transmission of the channel state information reporting after the switching does not collide with the transmission of the channel state information reporting before the switching.

5. The user terminal according to claim 1, wherein the reception section receives downlink control information including an instruction to transmit the channel state information reporting and an instruction of a partial band after the switching.

6. A radio communication method of a user terminal comprising:
receiving a downlink signal in a downlink partial band;
transmitting a channel state information reporting based on the downlink signal in an uplink partial band; and
controlling at least one of switching of at least one partial band of the downlink partial band and the uplink partial band, and the transmission of the channel state information reporting.
